# EUROPEAN PATENT SPECIFICATION

(11) **EP 2 246 397 B1**
(45) Date of publication and mention of the grant of the patent: **31.07.2013**
(21) Application number: 10004412.2
(22) Date of filing: 27.04.2010
(51) Int. Cl.: C09D 5/00

(54) **Acoustic and fire retardant foam coating composition for fibrous mat**
Schalldämm- und feuerfeste Schaumüberzugszusammensetzung für Fasermatte
Composition de revêtement en mousse acoustique et ignifuge pour tapis à fibres

(30) Priority: 28.04.2009 US 431540
(43) Date of publication of application: 03.11.2010
(73) Proprietor: Johns Manville, Denver CO 80202 (US)
(72) Inventor: Nandi, Malay, 80124 Littleton (US); Nandi, Souvik, 80003 Arvada (US)
(74) Representative: Mai, Dörr, Besier

(56) References cited:
- WO-A1-00/46255
- WO-A1-02/057374
- WO-A1-2004/110951
- WO-A2-02/12405
- WO-A2-02/48261
- WO-A2-03/022085
- DE-A1- 10 052 295
- DE-A1- 10 224 984
- US-A1- 2004 018 802
- US-A1- 2004 132 848

## Description

### Field of Art

The present disclosure relates to mineral filler based open cell foam coating composition that is applicable to fibrous (*i.e*., woven or non-woven) mat, and more particularly to acoustic and fire retardant coating composition.

### Background

Open cell foam coating compositions can be applied to various fibrous mats (*e.g*., fiberglass mats). Applications for such coated mats include, for example, sheathing - either external or internal (*e.g*., gypsum, stucco, concrete, wallboard, or tile backer), roofing, flooring, facers, ceiling tiles (*e.g*., low or high density foams, gypsum core, or concrete core), and laminated products (*e.g*., duct board).

However, to be considered for specific applications, often certain performance standards must be met. In particular, acoustic and fire retardant standards are of significant importance. Such performance standards include ASTM C423, mounting type A, NRC (noise reduction coefficient) 0.2 or more, the ASTM E84 ("Standard Test Method for Surface Burning Characteristics of Building Materials") and, EN 13823 ("European Single Burning Item" or SBI) fire tests.

There are various patents related to coating / foam coating composition applicable to glass fiber mats. For example, U.S. Patent No. 4,784,897 discloses a cover layer material on a matting or fabric basis for the manufacture of boards from liquid or liquid-containing starting components, covered bilaterally with cover layers, especially for the manufacture of gypsum boards and polyurethane (PU) hard foam boards; the matting or fabric having on one side a coating of 70 to 94 wt.-% of a powdered inorganic material and 6 to 30 wt.-%, absolutely dry weight, of a binding agent; U.S. Patent No. 4,879,173 and 5,342,680 disclose coating compositions comprising "resinous binder"; and U.S. Patent Nos. 5,112,678 and 6,77,0354 disclose coating compositions comprising "inorganic binder".

In addition, U.S. Patent Nos. 4,229,329, 4,495,238, 5,091,243, 5,965,257, and 6,858,550 disclose fire retardant coating compositions. For example, U.S. Patent No. 4,229,329 discloses a fire retardant coating composition useful as a paint or as a mastic composed of ultrafine pulverized fly ash, a low viscosity vinyl acrylic type emulsion polymer as a binder and water, with the ultrafine fly ash preferably comprising 24-50% of the composition by weight, and U.S. Patent No. 5,091,243 discloses a fire-resistant fabric suitable for use as a flame barrier comprising a flame durable textile fabric substrate formed of corespun yarns, the yarns comprising a core of flame resistant filament and a sheath of staple fibers, and an intumescent coating carried by one surface of the textile fabric substrate.

U.S. Patent No. 6,858,550 discloses a fire resistant fabric material comprising a substrate having an ionic charge which is coated with a coating having essentially the same ionic charge. The coating consists essentially of a filler material comprising clay and a binder material. The substrate is preferably fiberglass. U.S. Patent No. 6,858,550 discloses that the filler material may further comprise at least one additional filler selected from the group consisting of decabromodiphenyloxide, antimony trioxide, fly ash, charged calcium carbonate, mica, glass microspheres and ceramic microspheres and mixtures thereof and the binder material is preferably acrylic latex. U.S. Patent No. 6,858,550 further discloses that decabromodiphenyloxide and antimony trioxide impart the following nonlimiting characteristics: (1) flame retardant properties, (2) capability of forming a char, and (3) capability of stopping the spread of flames.

However, the aforementioned patents do not disclose a open cell foam coating composition that improves acoustic (ASTM C423, mounting type A, NRC 0.2 or greater) and pass the fire properties (ASTM E84 and EN 13823). What is needed is a foam coating composition applicable to fibrous mats that improves and passes acoustic ASTM C423, and fire tests ASTM E84 and EN 13823

### Summary

Provided is a foam coated fibrous mat comprising a fiberglass mat coated with a coating composition comprising:
(i) one or more fillers; and
(ii) one or more binders with each organic binder having a peak heat release rate of ≤1000 kW/m2 as measured by ASTM E1354, flux 30 kW/m2;
   wherein
(iii) said one or more organic binders selected from styrene-butadiene rubber (SBR), ethylene-vinyl chloride, polyvinylidenechloride, modified Polyvinylchloride, Polyvinyl alcohol, ethylene vinyl acetate (EVA), Polyvinyl acetate, ethylacrylate-methylmethacrylate acrylic copolymer latex, non-carboxylated acrylic with acrylonitrile copolymer latex, carboxylated butyacrylic copolymer latex, urea-formaldehyde latex, melamine-formaldehyde latex, polyvinvichloride-acrylic latex, methylmethacrylate-styrene copolymer latex, styrene-acrylic copolymer latex, phenol-formaldehyde latex, vinyl-acrylic latex, polyacrylic acid latex, Polysiloxane, aqueous silicone emulsion and mixtures thereof.
(iv) said filler are ceramic microspheres having a particle diameter D90% of ≤300 µm,
(v) said filler are ceramic microspheres having a bulk density of 0.1 to ≤5g/cm³.
(vi) said coated fiber glass mat comprising the coating composition has:
   (a) a FIGRA value of ≤120 W/s according to EN 13823, and
   (b) a flame index of ≤25 and
   (c) a smoke index of ≤50 according to ASTM E84 and
   (d) a NRC (noise reduction coefficient) of ≥0.2 according to ASTM C423, mounting type A, and
   (e) an air permeability of ≤50 CFM.

Such a open cell foam coating composition can offer a coated fibrous mat suitable for applications requiring that certain acoustic (*i.e*., ASTM C423, mounting type A, NRC 0.2 or greater) and fire performance standards (*i.e*., ASTM E84 and EN 13823 fire tests) be met. Since the open cell foam coating composition meets both the ASTM E84 and EN 13823 fire tests, it can be used in most any applications requiring fire retardancy.

### Detailed Description

Preferably, at least filler are ceramic microspheres having a particle size of D90% ≤300 µm, a density of ≤ 3g/cm³ and hardness of ≥ 2 on the Moh's scale. A foam coated fiberglass mat comprising the coating composition has sound absorption 0.2 or greater (NRC), a FIGRA value of ≤120 W/s according to EN 13823, and a flame index of ≤25 and a smoke index of ≤50 according to ASTM E84. The coating composition when applied as foam provides open cell structure after processing. The open cell foam diameter is 30 µm or less. In an embodiment, the combination of all binders / organic components present in the foam coating composition has a peak heat release rate of ≤1000 kW/m² as measured by ASTM E1354, flux 30 kW/m². The foam coating composition essentially uniformly penetrates the surface of the mat and provides a unique combination of surface porosity and surface smoothness. The total solids of the coating composition can comprise, for example, between 40-60 weight%, preferably about 47 weight% filler solids, between 30-60 weight%, preferably about 45 weight% binder solids, and between 1-15 weight %, preferably 8 weight% additional component(s) solids (*e.g*., modifiers, surfactants, etc.).

Exemplary fillers suitable for use in the presently disclosed coating composition are microspheres, in particular hollow microspheres, glass bubbles, in particular hollow glass bubbles, calcium carbonate, clay, mica, aluminum trihydrate, talc, and mixtures thereof. Prefered fillers are particles which are hollow and/or porous particles. The shape of the particles is preferably spherical. In an embodiment, each of the fillers present in the coating composition has a peak heat release rate ≤1000 kW/m² as measured by ASTM E 1354, flux 30 kW/m².

Binders Binders suitable for use in the presently disclosed coating composition are styrene-butadiene rubber (SBR), ethylene-vinyl chloride, polyvinylidenechloride, modified polyvinylchloride, polyvinyl alcohol, ethylene vinyl acetate (EVA), polyvinyl acetate, ethylacrylate-methylmethacrylate acrylic copolymer latex, non-carboxylated acrylic with acrylonitrile copolymer latex, carboxylated butyacrylic copolymer latex, urea-formaldehyde latex, melamine-formaldehyde latex, polyvinylchloride-acrylic latex, methylmethacrylate-styrene copolymer latex, styrene-acrylic copolymer latex, phenol-formaldehyde latex, vinyl-acrylic latex, polyacrylic acid latex, polysiloxane, aqueous silicone emulsion and mixtures thereof. In an embodiment, the binder is aqueous. The binder may comprise, for example, core-shell latex, polymer latex, and/or inorganic binder. In an embodiment wherein the binder comprises core-shell latex, the soft core can made of, for example, butadiene and/or butyl acrylate, and the shell can made of, for example, methyl methacrylate (MMA).

The foam coating composition can further comprise pigment (*i.e.,* organic or inorganic), surfactants, organic additive (*e.g*., rheology modifier), inorganic additives (*e.g*., colorants, biocides, cross linkers and/or stabilizers, such as, for example, oxidative stabilizer), thickener, and/or water repellants. In an embodiment, each component (*e.g*., each organic component) comprising ≥0.1 weight% of the dried (*i.e*., applied) coating composition has a peak heat release rate of ≤1000 kW/m² as measured by ASTM E1354, flux 30 kW/m².

In a preferred embodiment, at least one filler being present in the foam coating the ceramic microspheres, are solid or hollow particles, provided their particle diameter D90% is ≤300 µm, their density is from 0.1 to ≤3g/cm³ and their hardness is ≥2 on the Moh's scale.

In a preferred embodiment, the microspheres are ceramic hollow microsphere particles.

In a further preferred embodiment, the ceramic microspheres have a particle diameter D90% of ≤ 25µm, more preferred of ≤100µm, in particular of ≤90µm.

A further preferred class of ceramic microspheres have a Crush Strength of ≥1,000 psi, more preferred of ≥2,000 psi, most preferred of ≥3,000 psi.

In case the coated fiberglass mat coated with the coating composition comprising the aforementioned hollow ceramic microspheres in the coating composition should provide a good scrub and abrasion resistance it is preferred to use hollow ceramic microspheres with thick walls having a Crush Strength of ≥30,000 psi, more preferred of ≥40,000 psi, most preferred of ≥60,000 psi. Such thick wall hollow ceramic microspheres have preferably a bulk density of 1.5 to ≤3g/cm³, in particular a density of 1.8 to 2.8 g/cm³, most preferred a density of 2.0 to 2.7 g/cm³. Exemplary thick wall hollow ceramic microspheres are available from 3M under the trade name Zeeosphere^{™}.

A further preferred class of ceramic microspheres are hollow ceramic microspheres called "Cenosperes" which are minute, regular aluminosilicate spheres.

A further preferred class of ceramic microspheres with thinner walls having a bulk density of 0.1 to≤1.0g/cm³, in particular a density of 0.2 to 0.8 g/cm³, most preferred a density of 0.25 to 0.5 g/cm³. Exemplary thin wall hollow ceramic microspheres are available from Trelleborg AB under the trade name Fillite^{™}.

The coating composition according to the instant invention is typically applied as foam having a density of 0.03 to 0.6 g/cm³, preferably having a density of 0.04 to 0.5 g/cm³. The typical average foam diameter is from 0.5µm to 300µm, preferably from 1 to 200µm, most preferred from 5µm to 100µm, in particular preferred from 10µm to 50µm.

The coating composition according to the instant invention is preferably applied in amounts of s 500 g/ sq meter, more preferred in amounts of ≤ 400 g/ sq meter.

The coating composition according to the instant invention preferably is applied in a thickness of ≤ 4 mm, more preferred of ≤ 3 mm.

The presently disclosed coating composition is applicable to fiberglass mat, which can be defined as a substrate comprising at least partially of non-woven glass fibers (*e.g*., ≤30 microns average diameter). Remaining content, if any, could be organic or inorganic fiber (such as, for example, poly propylene, poly(ethylene terephthalate), basalt, or wollastanite fiber) and/or resin (*i.e*., organic and/or inorganic). The presently disclosed coating composition is also applicable to mats comprised of bleached cellulosic fibers and/or fibers derived from a cellulosic material, continuous filament mat, and/or synthetic fiber (*i.e*., continuous or discontinuous) mat. Examples of synthetic fibers include, for example, nylon, polyester, and polyethylene. The presently disclosed coating composition could be applied by any established method, and the application could comprise one pass or multiple passes. Most preferably, the coating composition is applied as foam with the specific's describer above.

The presently disclosed coating composition is also applicable to any fibrous mat including woven fiberglass textile.

A coated fibrous mat comprising a fiberglass mat coated with the coating composition according to the instant invention typically has an air permeability of ≤50 CFM (cubic feet per minute). The air permeability is measured using a Gurley Permeometer (Model 4301) available from Gurley Precision Instruments, Troy, NY, USA. Preferably, the fiberglass mat coated with the coating composition according to the instant invention has an air permeability of ≤50 CFM, more preferred ≤45 CFM, in particular preferred ≤20 CFM. In the most preferred embodiment of the invention, the fiberglass mat coated with the coating composition according to the instant invention has an air permeability of ≤15 CFM, in particular of ≤10 CFM. The lower limit of the air permeability is typically around 2 CFM. A very good acoustic behavior can be obtained when the fiberglass mat coated with the coating composition according to the instant invention has an air permeability between 2 and 8 CFM, in particular between 4 and 7 CFM.

A coated fibrous mat comprising a fiberglass mat coated with the coating composition according to the instant invention shows that the ceramic microspheres being present in the coating composition provide additional defined air pockets along with the open cell foam structure. Such air pockets are regions having different densities and/or phases in addition, compared to the remainder of the coating. Hence, the sound traveling through such coated fibrous mat is better absorbed. This result's either in coatings which can be chosen thinner compared to coating not containing such ceramic microspheres or in coatings having an improved sound/noise absorbtion when compared with coatings having the same or similar thickness lacking such ceramic microspheres.

The following illustrative examples are intended to be non-limiting.

### Examples

Table 1, below, provides a typical coating composition according to the instant invention when applied as foam:

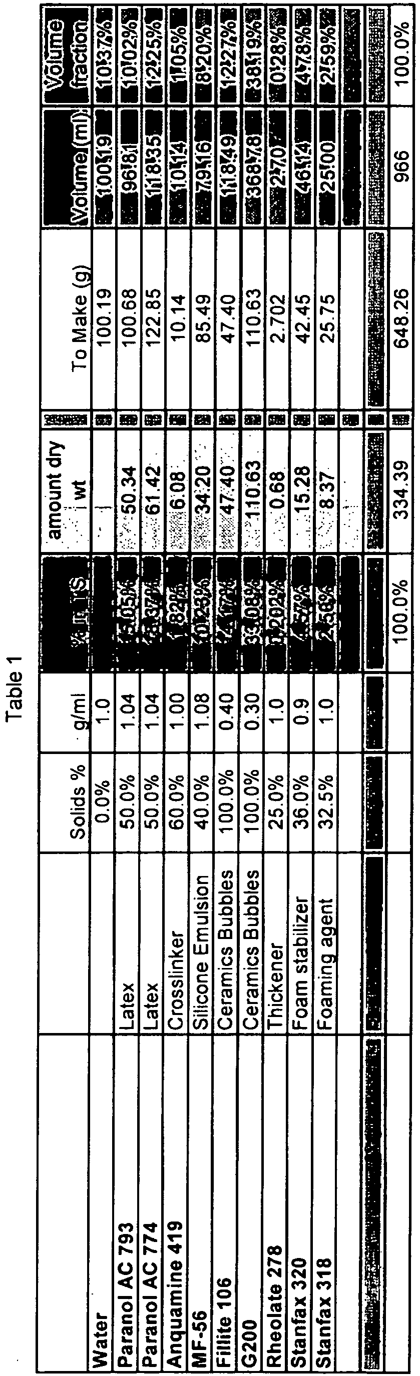

The standard fire test in USA is ASTM E-84 where it measures the total heat release in a given span of time. The use of good heat barrier / organic fire retardant along with the reduction of organic component in the coating composition is the usual approach. But this approach may not be successful for EN 13823.

This invention emphasizes on the use of organic ingredients with peak heat release rate equal to or less than 1000kW/m² to achieve the desired fire retardant property instead of more traditional expensive inorganic and organic fire retardants. Table 2, below, provides the peak heat release rate of a typical coating composition according to the instant invention:

**Table 2:**

| Latex Type | HRR of Latex (ASTM E1354, kW / m², flux 30 KW /M²) |
|---|---|
| Styrenebutadiene rubber | 1600 |
| Acrylic (V-29) | 585 |
| Ethylenevinylacetate (9100) | 497 |
| Polyvinyl chloride (650X18) | 12 |

The aqueous coating mixture is mechanically foamed and then coated on fibrous mat to provide acoustic effect. Typical foam density is between 0.05 and 0.4 g/ c.c.. Special care has been taken to make finer foam and reduce the open cell structure after processing. Typical average foam diameter is between 1 and 200 micron.

The ceramic microspheres generate defined air pockets in the foam structure, which provide more acoustic effect by increasing the number of phases in the path traveled by sound, hence, reduce the foam thickness and the coating weight. The ability to reduce coat weight is one of the key elements towards improved fire properties without addition of expensive organic/inorganic fire retardants

Experimental lab results show that the unique foam coating formulation when applied on a textile wall covering meets the NRC 0.2 or greater **(ASTM C423,** mounting type A), ASTM E-84 and EN 13823. Two similar products in wall covering application, although provides equivalent acoustic properties, do not qualify EN 13823 (Table 3).

**Table 3: NRC vs. Coat Wt**

| | Thickness (in) | Total wt (g, 99mm circular disc) | coat wt (gsm) | density (g / cc) | NRC ≥ 0.2 (ASTM 423C) | Air permeability (CFM) |
|---|---|---|---|---|---|---|
| Sample 1 | 0.09 | 3.89 | 340 | 0.18 | Pass | 6 |
| Sample 2 | 0.08 | 3.58 | 300 | 0.18 | Fail | 5 |
| JM Duracoustic® (Control) | 0.11 | 5.13 | 500 | 0.20 | Pass | 6 |
| Wall Carpet [e.g. Seabrook (North America), type AR132] | ~0.23 | NA | NA | NA | Pass | NA |

Both the Sample 1 & 2 passes the laboratory version of EN 13823 fire test while the Wall Carpet and JM Duracoustic® do not qualify EN13823.

While various embodiments have been described, it is to be understood that variations and modifications can be resorted to as will be apparent to those skilled in the art. Such variations and modifications are to be considered within the purview and scope of the claims appended hereto.

## Claims

1. A foam coated fibrous mat comprising a fiberglass mat coated with a coating composition comprising:
(i) one or more fillers; and
(ii) one or more binders with each organic binder having a peak heat release rate of ≤1000 kW/m2 as measured by ASTM E1354, flux 30 kW/m2;
wherein
(iii) said one or more organic binders selected from styrene-butadiene rubber (SBR), ethylene-vinyl chloride, polyvinylidenechloride, modified polyvinylchloride, polyvinyl alcohol, ethylene vinyl acetate (EVA), polyvinyl acetate, ethylacrylate-methylmethacrylate acrylic copolymer latex, non-carboxylated acrylic with acrylonitrile copolymer latex, carboxylated butyacrylic copolymer latex, urea-formaldehyde latex, melamine-formaldehyde latex, polyvinylchloride-acrylic latex, methylmethacrylate-styrene copolymer latex, styrene-acrylic copolymer latex, phenol-formaldehyde latex, vinyl-acrylic latex, polyacrylic acid latex, polysiloxane, aqueous silicone emulsion and mixtures thereof,
(iv) said filler are ceramic microspheres having a particle diameter D90% of ≤300 µm,
(v) said filler are ceramic microspheres having a bulk density of 0.1 to ≤5g/cm³,
(vi) said coated fiberglass mat comprising the coating composition has:
(a) a FIGRA value of ≤120 W/s according to EN 13823, and
(b) a flame index of ≤25 and
(c) a smoke index of ≤50 according to ASTM E84 and
(d) a NRC (noise reduction coefficient) of ≥0.2 according to ASTM C423, mounting type A, and
(e) an air permeability of ≤50 CFM.

2. The foam coated fibrous mat of claim 1, further comprising one or more components selected from the group consisting of pigments, surfactants, rheology modifiers, stabilizers, colorants, biocides, cross linkers, thickeners, water repellants, and mixtures thereof.

3. The foam coated fibrous mat of claim 1 to 2, wherein the one or more fillers are hollow microspheres.

4. The foam coated fibrous mat of claim 1 to 3, wherein each organic binder has a peak heat release rate of ≤600 kW/m² as measured by ASTM E1354, flux 30 kW/m².

5. The foam coated fibrous mat of claim 1 to 4, wherein each filler has a peak heat release rate of ≤1000 kW/m² as measured by ASTM E1354, flux 30 kW/m².

6. The foam coated fibrous mat of claim 1 to 5, wherein each component, preferably each organic component, comprising at least 0.1 weight% of dried coating composition has a peak heat release rate of ≤1000 kW/m² as measured by ASTM E1354, flux 30 kW/m².

7. The foam coated fibrous mat of claim 1 to 6, wherein all components comprising at least 0.1 weight% of dried coating composition have a peak heat release rate of ≤600 kW/m² as measured by ASTM E1354, flux 30 kW/m².

8. The foam coated fibrous mat of claim 1 to 7, wherein the one or more binders comprise core-shell latex, preferably the core-shell latex comprises a soft core comprising butadiene and/or butyl acrylate and a shell comprising methyl methacrylate.

9. The foam coated fibrous mat of claim 1 to 8, wherein the coating composition does not comprise a fire retardant, preferably organic fire retardant.

10. The foam coated fibrous mat of claim 1 to 9, wherein the ceramic microspheres are hollow particles.

11. The foam coated fibrous mat of claim 1 to 10, wherein the ceramic microspheres having a particle diameter D90% of ≤125µm.

12. The foam coated fibrous mat of claim 1 to 11, wherein the ceramic microspheres having a Crush Strength of ≥1,000 psi, preferably ≥3,000 psi, most preferred 30,000 psi.

13. The foam coated fibrous mat of claim 1 to 12, wherein the ceramic microspheres having a particle size of D90% ≤300µm, a density of less than 3g/cm³ and hardness of at least 2 on the Moh's scale.

14. The foam coated fibrous mat of claim 1 to 13, wherein the coating is applied as foam having a density of 0.03 to 0.6 g/cm³.

15. The foam coated fibrous mat of claim 1 to 14, wherein the coating is applied as foam having an average foam diameter from 0.5µm to 300µm.

16. The foam coated fibrous mat of claim 1 to 15, wherein the coating is applied in amounts of ≤500 g/sq meter,

17. The coated fibrous mat of claim 1, wherein the coated fiberglass mat has an air permeability of ≤20 CFM.

18. The coated fibrous mat of claim 17, wherein the coated fiberglass mat has an air permeability of ≤15 CFM, preferably of ≤10 CFM, more preferably an air permeability between 2 and 8 CFM.

## Patentansprüche

1. Schaumbeschichtete Fasermatte, umfassend eine mit einer Beschichtungszusammensetzung beschichtete Glasfasermatte, umfassend:
(i) einen oder mehrere Füllstoffe; und
(ii) einen oder mehrere Binder, wobei jeder organische Binder eine maximale Wärmefreisetzungsrate ≤ 1000 kW/m², gemessen durch ASTM E1354, bei einem Fluss von 30 kW/m² aufweist;
wobei
(iii) der eine oder die mehreren organischen Binder ausgewählt sind aus Styrol-Butadien-Gummi (SBR), Ethylen-Vinyl-Chlorid, Polyvinylidenchlorid, modifiziertem Polyvinylchlorid, Polyvinylalkohol, Ethylen-Vinylacetat (EVA), Polyvinylacetat, Ethylacrylat-Methylmethacrylat-Acryl-Copolymer-Latex, nicht carboxyliertem Acryl mit Acrylonitril-Copolymer-Latex, carboxyliertem Butyacryl-Copolymer-Latex, Harnstoff-Formaldehyd-Latex, Melamin-Formaldehyd-Latex, Polyvinylchlorid-Acryllatex, Methylmethacrylat-Styrol-Copolymer-Latex, Styrol-Acryl-Copolymer-Latex, Phenol-Formaldehyd-Latex, Vinyl-Acryllatex, Polyacrylsäure-Latex, Polysiloxan, wässriger Silikonemulsion und Gemischen davon,
(iv)die Füllstoffe keramische Mikrokügelchen sind, die ein Partikeldurchmesser D90% ≤ 300 µm aufweisen,
(v) die Füllstoffe keramische Mikrokügelchen sind, die eine Fülldichte von 0,1 bis ≤ 5g/cm³ aufweisen,
(vi)die die Beschichtungszusammensetzung umfassende beschichtete Glasfasermatte Folgendes aufweist:
(a) einen FIGRA-Wert ≤ 120 W/s gemäß EN 13823, und
(b) einen Flammenindex ≤ 25 und
(c) einen Rauchindex ≤ 50 gemäß ASTM E84 und
(d) einen NRC (Geräuschreduktionskoeffizient) ≥ 0,2 gemäß ASTM C423, Aufbau Typ A, und
(e) eine Luftdurchlässigkeit ≥ 50 FCKW.

2. Schaumbeschichtete Fasermatte nach Anspruch 1, weiterhin umfassend eine oder mehrere Komponenten ausgewählt aus der Gruppe bestehend aus Pigmenten, Tensiden, rheologische Modifizierungsmitteln, Stabilisatoren, Farbstoffen, Bioziden, Vernetzungsmitteln, Verdickern, Wasserabweisungsmitteln, und Gemischen davon.

3. Schaumbeschichtete Fasermatte nach Anspruch 1 bis 2, wobei der mindestens eine Füllstoff hohle Mikrokügelchen sind.

4. Schaumbeschichtete Fasermatte nach Anspruch 1 bis 3, wobei jedes organische Binder eine maximale Wärmefreisetzungsrate ≤ 600 kW/m², gemessen durch ASTM E1354, bei einem Fluss von 30 kW/m² aufweist.

5. Schaumbeschichtete Fasermatte nach Anspruch 1 bis 4, wobei jeder Füllstoff eine maximale Wärmefreisetzungsrate ≤ 1000 kW/m², gemessen durch ASTM E1354, bei einem Fluss von 30 kW/m² aufweist.

6. Schaumbeschichtete Fasermatte nach Anspruch 1 bis 5, wobei jede Komponente, vorzugsweise jede organische Komponente, umfassend mindestens 0,1 Gew.% einer getrockneten Beschichtungszusammensetzung, eine maximale Wärmefreisetzungsrate ≤ 1000 kW/m², gemessen durch ASTM E1354, bei einem Fluss von 30 kW/m² aufweist.

7. Schaumbeschichtete Fasermatte nach Anspruch 1 bis 6, wobei alle Komponente, umfassend mindestens 0,1 Gew.% einer getrockneten Beschichtungszusammensetzung, eine maximale Wärmefreisetzungsrate ≤ 600 kW/m², gemessen durch ASTM E1354, bei einem Fluss von 30 kW/m² aufweisen.

8. Schaumbeschichtete Fasermatte nach Anspruch 1 bis 7, wobei der mindestens eine Binder Kern-Hülle-Latex umfasst, der Kern-Hülle-Latex vorzugsweise einen weichen Kern umfassend Butadien und/oder Butylacrylat und eine Hülle umfassend Methyl-Methacrylat umfasst.

9. Schaumbeschichtete Fasermatte nach Anspruch 1 bis 8, wobei die Beschichtungszusammensetzung kein Feuerschutzmittel, vorzugsweise kein organisches Feuerschutzmittel umfasst.

10. Schaumbeschichtete Fasermatte nach Anspruch 1 bis 9, wobei die keramischen Mikrokügelchen Hohlpartikel sind.

11. Schaumbeschichtete Fasermatte nach Anspruch 1 bis 10, wobei die keramischen Mikrokügelchen ein Partikeldurchmesser D90% ≤ 125µm aufweisen.

12. Schaumbeschichtete Fasermatte nach Anspruch 1 bis 11, wobei die keramischen Mikrokügelchen eine Crush-Festigkeit ≥ 1.000 psi, vorzugsweise ≥ 3.000 psi, am meisten bevorzugt ≥ 30.000 psi aufweisen.

13. Schaumbeschichtete Fasermatte nach Anspruch 1 bis 12, wobei die keramischen Mikrokügelchen eine Partikelgröße D90% ≤ 125µm, eine Dichte weniger als 3g/cm³ und eine Härte von mindestens 2 auf der Moh-Skala aufweisen.

14. Schaumbeschichtete Fasermatte nach Anspruch 1 bis 13, wobei die Beschichtung als Schaum mit einer Dichte von 0,03 bis 0,6 g/cm³ aufgebracht wird.

15. Schaumbeschichtete Fasermatte nach Anspruch 1 bis 14, wobei die Beschichtung als Schaum mit einem durchschnittlichen Schaumdurchmesser von 0,5µm bis 300µm aufgebracht wird.

16. Schaumbeschichtete Fasermatte nach Anspruch 1 bis 15, wobei die Beschichtung in Mengen ≤ 500 g/m² aufgebracht wird.

17. Beschichtete Fasermatte nach Anspruch 1, wobei die beschichtete Glasfasermatte eine Luftdurchlässigkeit ≤ 20 FCKW aufweist.

18. Beschichtete Fasermatte nach Anspruch 17, wobei die beschichtete Glasfasermatte eine Luftdurchlässigkeit ≤ 15 FCKW, vorzugsweise ≤ 10 FCKW, noch mehr bevorzugt eine Luftdurchlässigkeit zwischen 2 und 8 FCKW aufweist.

## Revendications

1. Tapis à fibres revêtu en mousse comprenant un tapis à fibres de verre revêtu avec une composition de revêtement comprenant:
(i) un ou plusieurs matériaux de remplissage; et
(ii) un ou plusieurs liants avec chaque liant organique ayant un maximum du débit calorifique de ≤ 1000 KW/m² quand mesurée par ASTM E 1354, le flux de 30 kW/m²;
où
(iii) ledit un ou plusieurs liants organiques sont sélectés d'entre caoutchouc styrène-butadiène (SBR), chlorure d'éthylène-vinyle, chlorure de polyvinylidène, chlorure de polyvinyle modifié, alcool polyvinylique, acétate d'éthylène-vinyle (EVA), acétate de polyvinyle, latex de copolymère acrylique éthylacrylate-méthylméthacrylate, latex acrylique non-carboxylé avec latex de copolymère acrylonitrile, latex de copolymère butyacrilique carboxylé, latex urée-formaldéhyde, latex mélamine-formaldéhyde, latex acrylique de chlorure de polyvinyle, latex de copolymère méthylméthacrylate-styrène, latex de copolymère acrylique-styrène, latex de phénol-formaldéhyde, latex acrylique de vinyle, latex d'acide polyacrylique, polysiloxane, émulsion de silicone aqueuse et mélanges de ceux-ci,
(iv) ledit matériau de remplissage sont des microsphères céramiques ayant un diamètre de la particule D 90% de ≤ 300 µm,
(v) ledit matériau de remplissage sont des microsphères céramiques ayant un poids volumétrique de 0,1 à ≤5 g/cm³,
(vi) ledit tapis à fibres de verre revêtu comprenant la composition de revêtement présente:
(a) une valeur FIGRA de ≤120 W/s selon EN 13823, et
(b) un indice de flamme de ≤25 et
(c) un indice de fumée de ≤50 selon l'ASTM E 84 et
(d) un NRC (coefficient de réduction de bruit) de ≥0,2 selon l'ASTM C423, type de montage A, et
(e) une perméabilité de l'air de ≤50 CFM.

2. Tapis à fibres revêtu en mousse selon la revendication 1, comprenant de plus un ou plusieurs composants sélectés du groupe formé de pigments, surfactants, modificateurs de rhéologie, stabilisateurs, colorants, biocides, éléments de liaison réticulaire, épaisseurs, agents hydrofuges, et mélanges de ceux-ci.

3. Tapis à fibres revêtu en mousse selon la revendication 1 à 2, où un ou plusieurs matériaux de remplissage sont des microsphères creuses.

4. Tapis à fibres revêtu en mousse selon la revendication 1 à 3, où chaque liant organique présente un maximum de débit calorifique de ≤600 KW/m² quand mesurée par ASTM E 1354, le flux de 30 kW/m².

5. Tapis à fibres revêtu en mousse selon la revendication 1 à 4, où chaque matériau de remplissage présente un maximum de débit calorifique de ≤1000 KW/m² quand mesurée par ASTM E 1354, le flux de 30 kW/m².

6. Tapis à fibres revêtu en mousse selon la revendication 1 à 5, où chaque composant, préférablement chaque composant organique, comprenant au moins 0,1% en poids de composition de revêtement sèche présente un maximum de débit calorifique de ≤1000 KW/m² quand mesurée par ASTM E 1354, le flux de 30 kW/m².

7. Tapis à fibres revêtu en mousse selon la revendication 1 à 6, tous les composants comprenant au moins 0,1% en poids de composition de revêtement sèche présentent un maximum de débit calorifique de ≤600 KW/m² quand mesurée par ASTM E 1354, le flux de 30 kW/m².

8. Tapis à fibres revêtu en mousse selon la revendication 1 à 7, où un ou plusieurs liants comprennent le latex coeur -coquille, préférablement le latex coeur -coquille comprennent un coeur mou comprenant butadiène et/ou l'acrylate de butyle et une coquille comprenant le méthacrylate de méthyle.

9. Tapis à fibres revêtu en mousse selon la revendication 1 à 8, où la composition de revêtement ne comprend pas un matériau ignifuge, préférablement un matériau ignifuge organique.

10. Tapis à fibres revêtu en mousse selon la revendication 1 à 9, où les microsphères céramiques sont des particules creuses.

11. Tapis à fibres revêtu en mousse selon la revendication 1 à 10, où les microsphères céramiques ont un diamètre de la particule de D 90% de ≤125 µm.

12. Tapis à fibres revêtu en mousse selon la revendication 1à 11, où les microsphères céramiques ont une résistance à l'écrasement de ≥1 000 psi, préférablement ≥3 000 psi, le plus préféré ≥30 000 psi.

13. Tapis à fibres revêtu en mousse selon la revendication 1 à 12, où les microsphères céramiques ont une taille de la particule de D 90%≤300 µm, une densité de moins de 3g/cm³ et la dureté d'au moins 2 sur l'échelle Moh.

14. Tapis à fibres revêtu en mousse selon la revendication 1 à 13, où le revêtement est appliqué comme une mousse ayant une densité de 0,03 à 0,6 g/cm³.

15. Tapis à fibres revêtu en mousse selon la revendication 1 à 14, où le revêtement est appliqué comme mousse ayant un diamètre moyen de la mousse de 0,5 µm à 300 µm.

16. Tapis à fibres revêtu en mousse selon la revendication 1 à 15, où le revêtement est appliqué en quantités de ≤500 g/mètre carré.

17. Tapis à fibres revêtu selon la revendication 1, où le tapis à fibres de verre revêtu présente une perméabilité à l'aire de ≤20 CFM.

18. Tapis à fibres revêtu selon la revendication 17, où le tapis à fibres de verre revêtu présente une perméabilité à l'aire de ≤ 15 CFM, préférablement de ≤ 10 CFM, plus préférablement une perméabilité à l'aire entre 2 et 8 CFM.
